# EUROPEAN PATENT APPLICATION

(11) **EP 4 397 603 A1**
(43) Date of publication of application: **10.07.2024**
(21) Application number: 22862444.1
(22) Date of filing: 01.08.2022
(51) Int. Cl.: B65G 15/32, A01D 57/20

(54) **CONVEYOR BELT CLEAT**

(30) Priority: 01.09.2021 BR 102021017401
(71) Applicant: GTS Do Brasil Ltda., 88506-600 Bairro São Paulo (BR)
(72) Inventor: STRASSER, Assis, 88501-130 Lages (BR)
(74) Representative: Clarke, Modet y Cía., S.L.
(86) International application number: PCT/BR2022/050300
(87) International publication number: WO 2023/028673

(57) **Abstract**

The present invention pertains to the field of technologies dedicated to the conveyance of materials by conveyor belts. More specifically, the present invention relates to a resistant cleat (100) configuration for conveyor belts (200). The cleat of the present invention is provided with a differentiation at its end(s) in relation to its central portion, that is, a resistant end (101). This resistant end (101), both in reinforcement of manufacturing material and in a different shape, reduces the possibility of premature wear at the ends of the cleats due to direct contact with the conveyed products and the sliding areas on the return of the conveyor, as well as reduces the mechanical impact of the cleats with the conveyor surfaces.

## Description

### Field of the Invention:

The present invention pertains to the field of technologies dedicated to the conveyance of materials by conveyor belts. More specifically, the present invention relates to a resistant cleat configuration for conveyor belts.

### Backgrounds of the Invention:

Due to their ability to move large amounts of material, the conveyors have long been used in industry to move agricultural products, rocks, particulates and other mining materials, and various manufactured products.

One field in which conveyors are widely used is in equipment for moving agricultural products, as they can move a wide variety of sizes of solids without applying large impulses to the solid and without causing significant frictional damage between the surface of the moving mechanism and the solid, as experienced in the movement of solids by screws. In this way, the conveyor substantially minimizes potential damages to agricultural products.

In many situations, the conveyor belts have a plurality of shoulders that project from their surface in a spaced configuration, called cleats. They have the function of providing an additional load-conveying surface for the conveyor belt, preventing solids from sliding on the same and increasing the amount of product that can be moved compared to belt configurations that do not include cleats, i.e. smooth belts. Furthermore, the cleats inhibit material sliding in the opposite and/or perpendicular direction regarding the conveyance direction, especially when the material is conveyed along inclined sections.

Considering the constant contact of the materials to be conveyed with the surface of the belts and the cleats, it is necessary that the belts and cleats not only have a good grip surface, but also be durable in order to reduce non-productive downtime of agricultural machinery for maintenance and/or replacement.

However, the conveyor belts provided with cleats present some operational difficulties. For example, there may be premature wear on the ends of the cleats due to direct contact with the products/materials being conveyed. In addition, the pulleys and stops on the lower return side of the conveyor belt end up causing structural damage and accelerated wear to the belt cleats, especially at the ends of the cleats. Additionally, the cleats, when traveling on the lower return side of the belt, can generate jumps and vibrations of the conveyor belt when in contact with the pulleys and stops.

In accordance with the points taken, it is therefore an objective of this invention to provide a resistant cleat configuration, applied to flexible conveyor belts, that is easily usable in existing conveyance systems, with longer service life, reduced maintenance and smooth operation.

### State of the Art:

The teachings of the state of the art generally describe that the commonly applied shapes are cleats with constant cross-section shapes in the longitudinal direction. This geometry has the advantage of reducing the cost of parts and tools involved in manufacturing conveyor belts. With a simpler geometry, issues such as uniformity and quality assurance are more easily managed.

However, this causes the system to not perform optimally as the regions of the belts with cleats are stressed in different ways during use. Both the product and the machine itself wear out the belts and their cleats in different regions and with varying severity as well. For example, the harvested product may have more contact with the conveyor belts in the front portion of the machine, closer to the crop cutting region. The machine imposes wear on a different region due to the return shoes or sliding plates.

The present invention, contrary to what is commonly seen in the state of the art, overcomes these technical problems discussed by providing a cleat with a resistant end, which makes it possible to reduce premature wear at the ends of the cleat and to reduce mechanical impacts when the cleat is in contact with the conveyor return surfaces.

### Brief Description of the Invention:

The present invention pertains to the field of technologies dedicated to the conveyance of materials by conveyor belts. More specifically, the present invention relates to a resistant cleat configuration for conveyor belts. The cleat of the present invention is provided with a differentiation at its end(s) in relation to its central portion. This differentiation, both in reinforcement of manufacturing material and in different shape, reduces the possibility of premature wear at the ends of the cleats due to direct contact with the conveyed products and the sliding areas on the conveyor return, as well as reducing the mechanical impact of the cleats with the conveyor return surfaces.

### Brief Description of the Figures:

To obtain a total and complete visualization of the present invention, the figures to which references are made are presented, according to a preferred configuration of the present invention.
Figure 1 is a perspective view of a conveyor belt 200 with cleats 100.
Figure 2 is a first perspective view of an enlarged section of a cleat 100.
Figure 3 is a second perspective view of an enlarged section of one end of a cleat 100.
Figure 4 is a top view of an enlarged section of one end of a cleat 100.
Figure 5a is a side view of an enlarged section of one end of a cleat 100.
Figure 5b is an enlarged cross-sectional view of one end of a cleat 100.
Figure 6 is a perspective view of an enlarged cross-section of one end of a cleat 100.

### Detailed Description of the Invention:

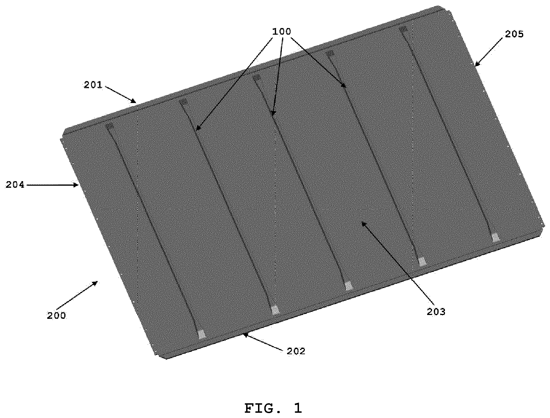

The present invention relates to a cleat configuration 100 for conveyor belts 200, as illustrated in Figure 1 of the present application. The cleat 100 of the present invention is provided with at least one resistant end 101, differentiated from its central portion 102.

At least one resistant end 101 is defined, initially, by an additional amount of manufacturing material on the end(s) 101 of the cleats 100, which results in greater resistance to premature wear on the ends of the cleats 100 due to direct contact with the conveyed products and the surfaces of the sliding/rolling elements located at the lower portion of the conveyor belt.

In a second moment, at least one resistant end 101 is defined by an inclined surface arrangement at the end(s) of the cleats 100, which results in a reduced incidence of mechanical impacts between the end(s) of the cleats 100 and the surfaces of the sliding/rolling/support elements located at the lower portion of the conveyor belt. This results in the additional benefit of providing a smoother transition of the cleats 100 between the different surfaces of the sliding/rolling/support elements located at the lower portion of the conveyor belt.

The cleat 100 of the present invention results, in addition to the primary benefits as already mentioned, in the following secondary benefits: better routing of products to the center of the conveyor belt and it avoids unwanted accumulation of products on the edges between the conveyor belt and the belt.

For purposes of understanding and better guidance regarding the features of the new and inventive cleat 100 of the present invention, mention is made, in a nonlimiting way, to a conveyor belt 200, as illustrated in Figure 1, which comprises at least:
A first side 201;
A second side 202;
An upper surface 203;
A first end 204; and
A second end 205.

Although one form of a conveyor belt 200 is illustrated in the present invention, a technician skilled on the subject will appreciate that this is not the only form of conveyor belt to which the present invention would be applicable. It is possible for the cleat 100 of the present invention to be applied to a variety of compatible conveyor belts, of varying sizes, thicknesses, materials and for a plurality of functions.

The conveyor belt 200 has a generally flat upper surface 203 on which objects are placed to be conveyed or displaced.

Furthermore, in the figures of the present application, only a portion of a conveyor belt 200 is disclosed. A technician skilled on the subject will appreciate that a plurality of portions of conveyor belts 200 may be configured so that a first end 204 and a second end 205, on opposite sides, of respective conveyor belts 200 are connected to each other to form a continuous conveyor belt.

The conveyor belt 200 of the present invention is preferably made of natural or synthetic rubber, with a reinforcing mesh of textile fibers inside. This fabric mesh can be made from natural, synthetic or mixed material. For different levels of belt resistance, the rubber layer and the number of meshes inside may vary. Therefore, the thicker or greater the number of meshes, the greater the traction capacity of the conveyor belt. However, the thickness and number of meshes must be defined according to the dimensions and capabilities of the machine, as they may become unfeasible both due to their weight and their minimum radius of curvature. The increase in belt weight requires increasingly robust drive devices, while the minimum belt curvature radius must be suitable for the diameters of the rollers supporting the conveyor belt.

As disclosed in Figure 1 of the present application, the conveyor belt 200 generally comprises a first side 201 and a second side 202. At least one cleat 100 of the present invention is generally fixed to an upper surface 203 of the conveyor belt 200, between the first side 101 and second side 202 of the conveyor belt 200.

It will be appreciated by one skilled in the art that the cleats 100 of the present invention may be attached to the conveyor belt 200 during a manufacturing process, such that the cleats are formed integral to the conveyor belt 200, or the cleats 100 are formed separately from the conveyor belt 200 and then attached to the conveyor belt 200.

The fixation of the cleats 100 on the conveyor belt 200 can be by means of vulcanization, adhesives, friction welding or screws; preferably, the fixation of the cleats 100 on the conveyor belt 200 is by means of vulcanization during a manufacturing process of the conveyor belt 200.

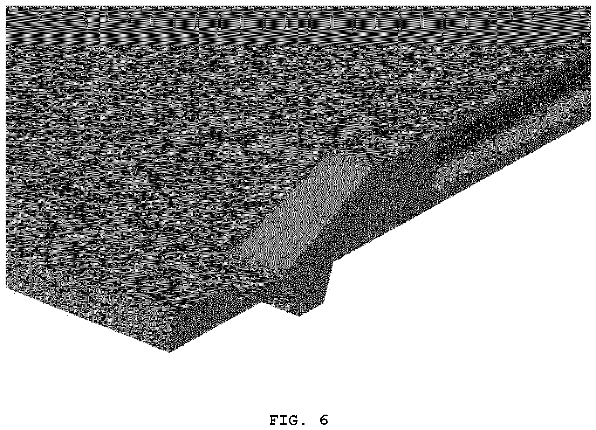

The cleat 100 of the present invention is preferably made of natural or synthetic rubber. Preferably, further, the cleat 100 may have an internal reinforcement, as partially illustrated in Figure 6, preferably manufactured from a composite material, such as, for example, glass fiber or carbon fiber, with various shapes, such as, for example, drop-shaped, triangular, rectangular or prismatic. A technician skilled on the subject will appreciate that various shapes and materials of this internal reinforcement are widely discussed in the state of the art.

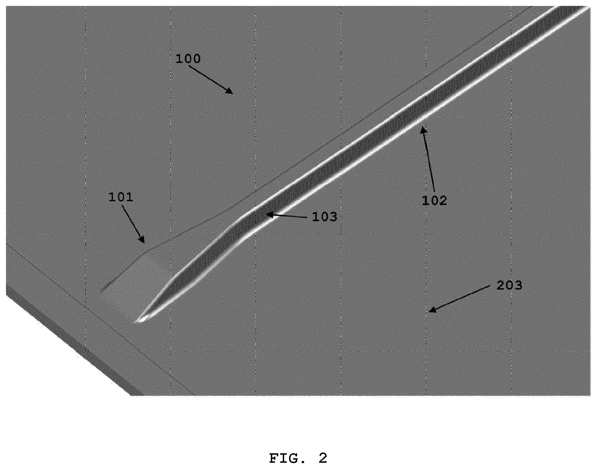

At least one cleat 100 of the present invention, as illustrated in Figure 2, comprises, in its preferred configuration, at least:
a central body portion 102; and
a resistant end 101.

The cleat 100 projects from an upper surface 203 of the conveyor belt 200. In some configurations, as illustrated in Figure 1, the cleat 100 may be oriented generally transverse to conveyor belt 200. In other configurations, the cleat 100 may be oriented at an angle relative to the conveyor belt 200. Preferably, the cleat 100 is oriented generally transverse to the conveyor belt 200.

The cleats 100 are arranged in a spaced configuration on the conveyor 200. The spacing between the cleats 100 depends on factors such as the type and quantity/volume of material that is desired to convey/displace on the conveyor belt 200. The spacing between the cleats 100 may be between about 50 mm and about 2000 mm, preferably between about 100 mm and 800 mm, and most preferably about 300 mm.

The cleats 100 are generally oriented substantially parallel to each other. However, a technician skilled on the subject will appreciate that all, or some, of the cleats 100 need not necessarily be oriented generally parallel to each other, but may be oriented at a plurality of angles relative to each other.

The length of the cleats 100 of the present invention can be selected based on factors such as the type and quantity/volume of material that is desired to be conveyed/displaced on the conveyor belt 200. The length of the cleats 100 can be between about 400 mm and 2000 mm, preferably between about 800 mm and 1200 mm, and more preferably about 1000 mm.

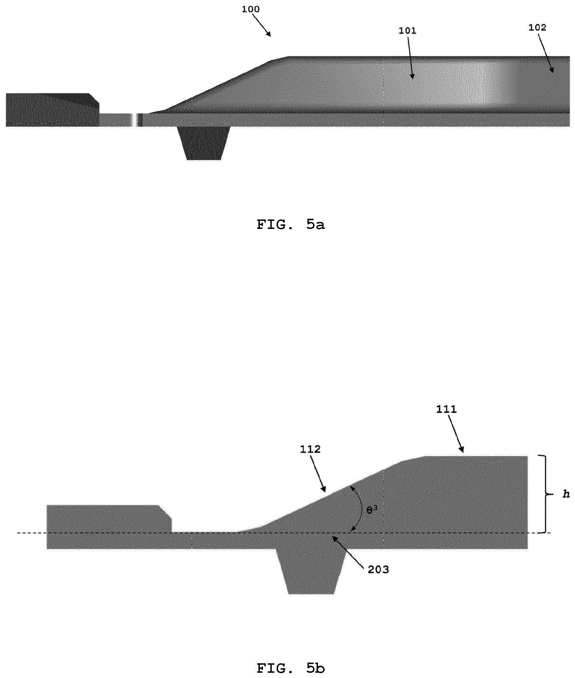

The height A of the cleats 100 of the present invention, as illustrated in Figure 5b, can be selected based on factors such as the type and quantity/volume of material that is desired to be conveyed/displaced on the conveyor belt 200. The height A of the cleats 100 may be between about 1 mm and 200 mm, preferably between about 10 mm and 20 mm, and most preferably about 13.5 mm.

The thickness of the cleats 100 varies between its body portion 102 and its at least one resistant end 101. The cleats 100 in its body portion 102 may have a thickness that is sufficiently thick, so that at least a portion of the length of the body portion 102 of the cleats 100 is resilient to deformation and resistant to wear. The thickness of the body portion 102 of the cleats 100 may be between about 5 mm and 200 mm, preferably between about 8 mm and 50 mm.

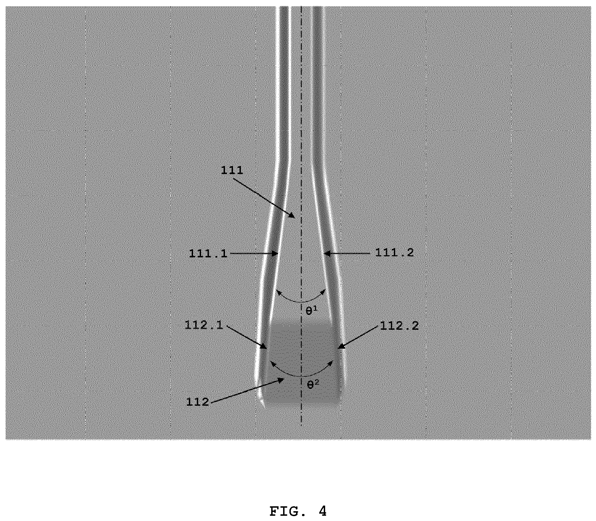

The cleat 100 of the present invention, along its entire length, which includes at least one resistant end 101 and the body portion 102, can be formed with a base that is wider than its top. Such a configuration, which can be seen in Figure 4, can not only increase the strength of the attachment of the cleats 100 to the upper surface 203 of the conveyor belt 200, but can also improve the rigidity of the cleats 100. This tapering of the body portion 102 of the cleats 100 can be defined by an angle formed between a side portion 103 of the cleats 100 and the upper surface 203 of the conveyor belt 200. The angle can be between about 60° and 89°, preferably between about 75° and 85°.

It is preferable that all edges, surfaces with varying thickness and the union between the parts of the cleats 100 or the union between the parts of the cleats 100 with parts of the conveyor belt 200 be with the use of chamfers and/or radii to avoid stress concentration, i.e., free from sharp corners.

The cleats 100 can have a symmetrical configuration, which preferably allows the conveyor belt 200 to be used reversibly, thus enabling the conveyance of material by the cleats 100 in both directions. This configuration further allows the conveyor belt 200 to be installed in either direction. Furthermore, this configuration allows an operator to take turns, periodically or as desired, installing the conveyor belt 200 in order to avoid unilateral wear of the cleats 100.

The body portion 102 of the cleats 100 is generally selected from the following shapes: triangular, rectangular, trapezoidal, circular, prismatic or wavy. Preferably, the body portion 102 of the cleats 100 has a generally trapezoidal shape, that is, with a larger base and a smaller top.

The cleats 100 of the present invention are generally linear in shape, with the exception of at least one resistant end 101. The shape of the cleats 100 depends on factors such as the type and quantity/volume of material that is desired to be conveyed/displaced on the conveyor belt 200. The shape of the cleats 100 can be one of linear, curved, "V", open "V", closed "V", "Y", "F", or any combination thereof. Preferably, the shape of the cleats 100 is generally linear.

The cleats 100 may have a continuous or non-continuous structure. Preferably, the cleats 100 have a continuous structure.

The cleats 100 of the present invention are provided with at least one resistant end 101. At least one resistant end 101 has a shape generally selected from: triangular, trapezoidal, rectangular, circular, teardrop or prismatic. Preferably, at least one resistant end 101 of the cleats 100 is generally triangular in shape.

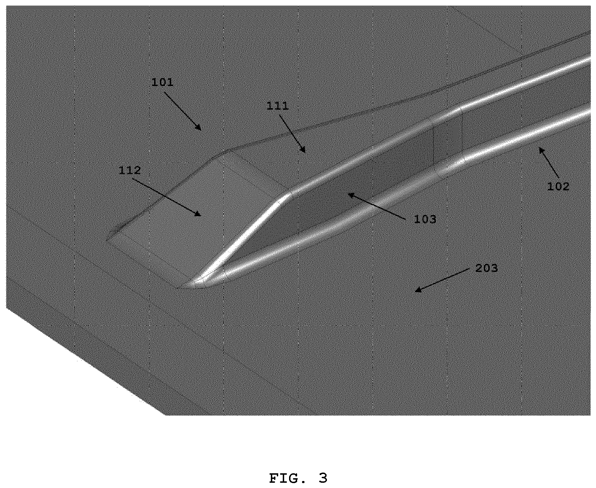

At least one resistant end 101, as illustrated in Figures 3 and 4, comprises a first surface 111 and a second surface 112.

The first surface 111 is substantially contiguous with the body portion 102 and also substantially parallel to the upper surface 203 of the conveyor belt 200. The first surface 111 is defined by a first edge 111.1, a second edge 111.2 and a first angle θ¹, as illustrated in Figures 3 and 4. The first surface 111 expands towards the second surface 112.

The first surface 111 may have a length of about 20 mm to 100 mm, preferably about 40 mm to 60 mm, more preferably about 55 mm. The length of the first surface 111 is the distance between the region of the beginning of the thickness increase of at least one resistant end 101 to the beginning of the second surface 112.

The second surface 112 is inclined with respect to the first surface 111 and expands towards the upper surface 203 of the conveyor belt 200 until it contacts the same. The second surface 112 is defined by a first edge 112.1, a second edge 112.2, a second angle θ² and a third angle θ³, as illustrated in Figures 4, 5a and 5b.

The second surface 112 may have a length of about 10 mm to 100 mm, preferably about 20 mm to 40 mm, more preferably about 30 mm. The length of the second surface 112 is the distance between the end of the first surface 111 and the upper surface 203 of the conveyor belt 200.

As illustrated in Figure 4, the first angle θ¹ of the first surface 111 indicates a first opening, that is, a first increase in the thickness of the cleats 100 in relation to the thickness of the body portion 102, the first angle θ¹ being defined between a first edge 111.1 and a second edge 111.2 of the first surface 111.

The first angle θ¹ can be between about 10° and 30°, preferably between about 12° and 16°, more preferably about 14.3°.

As also illustrated in Figure 4, the second angle θ² of the second surface 112 indicates a second opening, larger than the first opening, being a second increase in the thickness of the cleats 100 in relation to the thickness of the first surface 111 and the body portion 102, the second angle θ² being defined between a first edge 112.1 and a second edge 112.2 of the second surface 112.

The second angle θ² can be between about 2° and 25°, preferably between about 5° and 12°, more preferably about 8.4°.

As illustrated in Figure 5b, the third angle θ³ indicates an inclination portion of at least one resistant end 101, the third angle θ³ being defined between the second surface 112 of at least one resistant end 101 and the upper surface 203 of the conveyor belt 200.

As illustrated in Figures 5a and 5b, the inclination of the second surface 112 results in a decrease in the height *h* of the cleat until it meets the upper surface 203 of the conveyor belt 200, that is, until the height A be substantially equal to 0.

The third angle θ³ can be between about 10° and 40°, preferably between about 15° and 30°, more preferably about 25°.

In this way, those skilled in the art will value the knowledge presented herein and will be able to reproduce the invention described in the presented embodiments and in other variants, encompassed by the scope of the attached claims.

## Claims

1. A conveyor belt (200) cleat (100), **characterized in that** it comprises:
a body portion (102); and
at least one resistant end (101);
at least one resistant end (101) comprising a first surface (111) and a second surface (112);
wherein the first surface (111) is wider than the body portion (102) of the cleat (100) and expands toward the second surface (112) of the resistant end (101);
wherein the second surface (112) is wider than the first surface (111) and expands towards an upper surface (203) of the conveyor belt (200); and
wherein the second surface (112) further comprises an inclination relative to the first surface (111).

2. The conveyor belt (200) cleat (100) according to claim 1, **characterized in that** the first surface (111) is defined between the body portion (102), the second surface (112) and a first angle (θ¹).

3. The conveyor belt (200) cleat (100) according to claim 2, **characterized in that** the first angle (θ¹) is defined between a first edge (111.1) and a second edge (111.2) of the first surface (111).

4. The conveyor belt (200) cleat (100) according to claim 3, **characterized in that** the first angle (θ¹) is between 10° and 30°, preferably between 12° and 16°.

5. The conveyor belt (200) cleat (100) according to claim 2, **characterized in that** the first surface (111) has a length of 20 mm to 100 mm, preferably 40 mm to 60 mm.

6. The conveyor belt (200) cleat (100) according to claim 1, **characterized in that** the second surface (112) is defined between the first surface (111), an upper surface (203) of the conveyor belt (200) and a second angle (θ²).

7. The conveyor belt (200) cleat (100) according to claim 6, **characterized in that** a second angle (θ²) is defined between a first edge (112.1) and a second edge (112.2).

8. The conveyor belt (200) cleat (100) according to claim 7, **characterized in that** the second angle (θ²) is between 2° and 25°, preferably between 5° and 12°.

9. The conveyor belt (200) cleat (100) according to claim 6, **characterized in that** the second surface (112) has a length of 10 mm to 100 mm, preferably 20 mm to 40 mm.

10. The conveyor belt (200) cleat (100) according to claim 1, **characterized in that** the inclination of the second surface (112) in relation to the first surface (111) is defined by a third angle (θ³).

11. The conveyor belt (200) cleat (100) according to claim 10, **characterized in that** the third angle (θ³)is defined between the second surface (112) and the upper surface (203) of the conveyor belt (200).

12. The conveyor belt (200) cleat (100) according to claim 11, **characterized in that** the third angle (θ³)is between 10° and 40°, preferably between about 15° and 30°.

13. The conveyor belt (200) cleat (100) according to claim 1, **characterized in that** the shape of the cleat (100) is one of linear, curved, "V", open "V", closed "V", "Y" or "F".

14. The conveyor belt (200) cleat (100) according to claim 1, **characterized in that** a plurality of cleats (100) are oriented transversely to the conveyor belt (200).

15. The conveyor belt (200) cleat (100) according to claim 1, **characterized in that** a plurality of cleats (100) are oriented parallel to each other.

16. The conveyor belt (200) cleat (100) according to claim 1, **characterized in that** the spacing between cleats (100) is between 400 mm and 2000 mm, preferably between 100 mm and 800 mm.

17. The conveyor belt (200) cleat (100) according to claim 1, **characterized in that** the length of the cleat (100) is between 50 mm and 2000 mm, preferably between 800 mm and 1200 mm.

18. The conveyor belt (200) cleat (100) according to claim 1, **characterized in that** a height (*h*) of the cleat (100) is between 1 mm and 200 mm, preferably between 10 mm and 20 mm.

19. The conveyor belt (200) cleat (100) according to claim 1, **characterized in that** a thickness of the body portion (102) of the cleat (100) is between 5 mm and 200 mm, preferably between 8 mm and 50 mm.

20. The conveyor belt (200) cleat (100) according to claim 1, **characterized in that** it additionally comprises an internal reinforcement.
